# EUROPÄISCHE PATENTSCHRIFT

(11) **EP 1 607 139 B1**
(45) Veröffentlichungstag und Bekanntmachung des Hinweises auf die Patenterteilung: **21.01.2009**
(21) Anmeldenummer: 04102777.2
(22) Anmeldetag: 17.06.2004
(51) Int. Cl.: B05B 13/02

(54) **Vorrichtung und Verfahren für das Beschichten von Tabletten mittels einer rotierenden Trommel**
Device and method for coating of pills with a rotary drum
Appareil et méthode pour le revêtement des pilules avec un tambour rotatif

(43) Veröffentlichungstag der Anmeldung: 21.12.2005
(73) Patentinhaber: Gebr. Lödige Maschinenbau Gesellschaft mbH, 33102 Paderborn (DE)
(72) Erfinder: Juergens, Hans-Herman, Elsener Str. 7, D-33102 Paderborn (DE)
(74) Vertreter: Gille Hrabal Struck Neidlein Prop Roos

(56) Entgegenhaltungen:
- EP-A- 0 072 467
- DE-A- 4 036 668
- ANONYMOUS: "Systemlösungen für die Pharma-Industrie" INTERNET ARTICLE, [Online] Juni 2001 (2001-06), XP002304902 Gefunden im Internet: URL:www.loedige.de/de/uploads/pharma.pdf>
- PATENT ABSTRACTS OF JAPAN Bd. 2000, Nr. 08, 6. Oktober 2000 (2000-10-06) & JP 2000 140709 A (FREUNT IND CO LTD), 23. Mai 2000 (2000-05-23)
- ANONYMOUS: "Coating System für Film-Zuckercoating" INTERNET ARTICLE, [Online] 2003, XP002304903 Gefunden im Internet: URL:http://www.loedige.de/de/uploads/FL-PR O-GER-LHC-GLP200103.pdf>

## Beschreibung

Die Erfindung betrifft eine Vorrichtung sowie ein Verfahren für das Beschichten von Tabletten.

Kommerziell kann eine Vorrichtung für das Beschichten von Tabletten erworben werden, die eine Trommel umfasst, Die Trommel weist perforierte Segmente auf, Die Trommel wird horizontal gelagert, Diese kann um eine horizontale Achse gedreht werden, Die Trommel weist eine Entleerungsöffnung und eine Tür auf, Durch die Tür werden die Tabletten in die Trommel hinein gegeben, In der Trommel werden die Tabletten beschichtet. Durch die Entleerungsöffnung werden die beschichteten Tabletten entleert,

Seitlich bzw, an einer Stirnseite der Trommel ist die Tür angebracht. Diese Seite wird im folgenden als Vorderseite bezeichnet, Die Entleerungsöffnung kann sich im Umfang der Trommel befinden, Befindet sich die Entleerungsöffnung unten, so können durch diese Öffnung schwerkraftbedingt die beschichteten Tabletten entnommen werden.

In einer anderen kommerziell erhältlichen Ausführungsform der Erfindung gibt es im Inneren der Trommel ein spezielles Mischwerk, Dieses ist so beschaffen, dass bei entgegengesetzter Drehung im Vergleich zur Drehrichtung während des Mischens bzw, Beschichtens die in der Trommel befindlichen Tabletten zur Vorderseite gefördert werden,

Von der Vorderseite her gesehen wird über eine erste Zuführung das zu beschichtende Material, welches zu beschichten ist, in die Trommel eingeleitet. Über eine zweite Zuführung wird Luft dem Inneren der Trommel zugeführt. Wässrige oder mit organischen Lösungsmitteln versehene Suspensionen oder Lacke werden über die erste Zuleitung in das Innere des Mischgefäßes gebracht. Im Inneren tritt die Suspension über mindestens eine Düse aus, Die Düse ist so beschaffen, dass die Suspension im Inneren der Trommel vernebelt wird. Die Suspension gelangt so nebelförmig auf die Tabletten, Dabei wird langsam das Mischgefäß um die horizontale Achse gedreht, Typischerweise dreht sich die Trommel mit bis zu 25 Umdrehungen pro Minute,

Zeitgleich oder zyklisch wird konditionierte (temperierte, getrocknete, gefilterte) Luft in das Innere der Mischtrommel eingeleitet. Die Luft tritt erwärmt über ein Lochblech gleichmäßig aus, Primär hat der Luftstrom die Aufgabe, den auf die Tablette auftreffenden Lack bzw, Suspension zu trocknen, Zu diesem Zweck ist das Lochblech beim Stand der Technik oberhalb der Düse und gleichgerichtet mit der Düse angeordnet. Durch diese Anordnung wird erreicht, dass der Luftstrom gleichmäßig in Richtung des Mischgutes, also in Richtung des Produktes, also der Tabletten strömt, Dabei wird die vernebelte Suspension ebenfalls in Richtung des Produktes transportiert. Eine Suspension gelangt so besonders zuverlässig auf die Tabletten,

Der Luftstrom tritt durch die Perforierung der Trommeisegmente wieder aus. Die Perforierung ist beim Stand der Technik in einer Ausführungsform über den Umfang der Trommel verteilt, Es handelt sich um vier gleich große Segmente.

Die Düse ist nach unten gerichtet. Damit tritt die Suspension unmittelbar in Richtung auf das Mischgut aus der ersten Zuleitung aus, Der Luftstrom tritt in gleicher Richtung aus, Das Lochblech ist also entsprechend diesem Zweck angeordnet,

Die beschriebene Vorrichtung wird von der Patentanmelderin kommerziell vertrieben.

Im medizinischen Bereich gibt es darüber hinaus das Problem, dass Produkte nur mit den Maschinen hergestellt werden dürfen, die im Rahmen des Zulassungsverfahrens dokumentiert und validiert worden sind, Wird die Maschine geändert, so bedarf es eines anzeigepflichtigen Änderungsverfahrens, um die Tabeletten mit der veränderten Maschine gemäß der Zulassung herstellen zu dürfen. Hiermit sind erheblicher Aufwand und Kosten verbunden.

Aus der Druckschrift Systemlösungen für die Pharma-Industrie der Firma Lödige, Juni 2001 , ist eine "Coater LHC" genannte gattungsgemäße Vorrichtung für das Beschichten von Tabletten bekannt. Die dazugehörige Veröffentlichungsnummer lautet XP00230492. Ein Trocknungsluftstrom wird frontseitig durch eine in die Trommel hineinragende Zuluftführung in das Trommelzentrum geleitet und fließt richtungsgleich mit dem Sprühnebel der Coating-Lösung, die für das Beschichten benötigt wird.

Aus der EP 0 072 467 A1 ist eine Dragiertrommel bekannt, bei der ein Ende für die Zuführung von Luft oberhalb einer Sprühmittelleitung angeordnet ist.

Die Druckschrift DE 40 36 668 A1 offenbart eine Beschichtungsmaschinezum Beschichten von Tabletten. Luft wird über eine mit Schlitzen versehene Verteilerscheibe in eine Trommel dieser Vorrichtung zugeführt.

Aufgabe der Erfindung ist es, das Beschichten von Tabletten zu vereinfachen,

Die Aufgabe wird mit einer Vorrichtung mit den Merkmalen des ersten Anspruchs gelöst, Vorteilhafte Ausgestaltungen ergeben sich aus den Unteransprüchen. Im nebengeordneten Anspruch wird ein vorteilhaftes Verfahren unter Schutz gestellt,

Erfindungsgemäß wird im Unterschied zum vorgeschriebenen Stand der Technik nun die Suspension seitlich über eine erste Seite der Trommel zugeführt und die Luft seitlich an der entgegengesetzten Seite. Die Suspension wird also beispielsweise über die Vorderseite und die Luft über die Hinterseite zugeführt. Hierdurch wird erreicht, dass an der Seite, von der aus die Bedienung durch den Nutzer erfolgt, mehr Platz vorhanden ist, Dieser Platz ist für den Nutzer der Maschine bei der Produktion von besonderem Interesse. Produktionsabläufe lassen sich so vereinfachen, verbessern und/oder verbilligen. Auch ist der konstruktive Aufwand geringer. Es ergeben sich also u, a. Kostenvorteile bei der Herstellung.

Bevorzugt wird die Suspension von der Vorderseite zugeführt. Die Zuführung sowie die Düse, über die Suspension zugeführt wird, muss von Zeit zu Zeit gereinigt werden, Es ist daher von Vorteil, diese Zuführung von der Vorderseite, also von der Bedienerseite her vorzusehen. Dadurch ist der Reinigungsaufwand geringer. Bei der Luftzuführung fällt nämlich ein entsprechender Reinigungsaufwand nicht oder in einem deutlich geringeren Umfang an. Daher erfolgt die Luftzuführung bevorzugt von der vergleichsweise schwer zugänglichen Rückseite.

In einer vorteilhaften Ausführungsform der Erfindung wird die Suspension unterhalb oder auf Höhe der Drehachse der Trommel zugeführt, Die Luft wird ganz oder überwiegend oberhalb der Drehachse der Trommel zugeführt, Es kann so die Luft von oben kommend in Richtung Schüttgut gerichtet werden und dabei die vernebelte Suspension in Richtung des Mischguts bzw, Tabletten transportieren. Da das Mischgut, also die Tabletten im Inneren der Trommel abrollen, befinden sich diese während der Beschichtung im Mittel nicht am tiefsten Punkt, sondern in Abhängigkeit von der Drehgeschwindigkeit der Trommel etwas seitlich versetzt von diesem tiefsten Punkt, Vorteilhaft wird dies bei der Anordnung der Luftzuführung sowie der Zuführung von Suspension berücksichtigt, indem die Mittel zur Zuführung von Luft und Suspension so ausgerichtet sind, dass die Suspension sowie die Luft in Richtung dieses seitlich versetzten Punktes gelenkt werden, Werden eine gelochte Platte und eine Düse als Zuführungsmittel eingesetzt, so sind die gelochte Platte sowie die Düse nicht exakt vertikal, sondern entsprechend schräg ausgerichtet, Die gelochte Platte ist dann in etwa parallel zur Oberfläche ausgerichtet, die die Tabletten während der Beschichtung bilden. Luft und Suspension treten dann in gleicher Richtung aus dem jeweiligen Zuführungsmittel aus, Die Austrittsrichtung von Luft und Suspension schließen dann mit der Vertikalen einen Winkel ein, der größer als 0° und kleiner als 90° ist, Regelmäßig liegt dieser Winkel zwischen 10° und 60°, insbesondere bei 25 bis 50° bei üblichen Umdrehungszahlen von bis zu 25 Umdrehungen pro Minute.

Beim Stand der Technik wurde die Luft über eine ringförmige Ausnehmung an der Vorderseite der Trommel zugeführt. Die erfindungsgemäße Trommel weist an der Vorderseite vorteilhaft nach wie vor diese ringförmige Ausnehmung aus. An der Rückseite ist nun jedoch bevorzugt eine kreisförmige Platte vorgesehen, die drehbar mit dem übrigen Teil der Trommel verbunden ist. Die drehbare Verbindung ist bevorzugt dichtend ausgestaltet. Während des Mischens dreht sich die Trommel und nicht die kreisförmige Platte. Durch diese kreisförmige Platte wird die Luft über eine entsprechende Leitung hindurchgeführt, Der technische Bereich, so zum Beispiel elektronische Steuerungen, Motoren usw, der Gesamtvorrichtung wird dann hinter der Rückseite der Trommel angeordnet. Dieser technische Bereich wird so vom Produktionsbereich abgetrennt, was für den störungsfreien Betrieb von Vorteil ist, Daher wird im hinteren Bereich vorteilhaft nicht ebenfalls eine ringförmige Öffnung wie bei der Vorderseite vorgesehen, um so die gewünschte Abschirmung des Produktionsbereiches vom technischen Bereich zu gewährleisten.

Die dichtende Verbindung bei der drehbaren Lagerung besteht im Allgemeinen aus einem Elastomer oder einer elastomeren Mischung, Sie ist vorteilhaft lebensmittelecht und in der Regel je nach Anwendungsgebiet für pharmazeutische Zwecke geeignet, Silikon ist ein typisches Material, welches für die vorgenannten Zwecke gut geeignet ist,

In einer vorteilhaften Ausführungsform wird eine Trommel bereitgestellt, bei der lediglich einzelne Segmente des Umfangs perforiert sind (teilweise perforierte Trommel). Es wird weiter eine Trommel bereitgestellt, die über den ganzen Umfang der Trommel perforiert ist (vollperforierte Trommel), Die Seitenwände der beiden Trommeln sind aus Gründen der Abschirmung von der Perforierung ausgenommen, Beide Trommeln sind so an den übrige Teil der Vorrichtung angepasst, dass in Abhängigkeit vom Bedarf die jeweilige Trommel in der Gesamtvorrichtung eingesetzt werden kann, Mit ein und derselben Peripherie können also unterschiedliche Trommeln verwendet werden, Dies ist von Vorteil, um unterschiedliche Medikamente herstellen zu können, die in einem Fall mit der teilweise perforierten Trommel und im anderen Fall mit der vollständig perforierten Trommel validiert worden sind.

Wird eine vollperforierte Trommel eingesetzt, so treten höhere Reibungskräfte zwischen den Tabletten und der Trommel während des Mischvorgangs auf, Die höheren Reibungskräfte haben zur Folge, dass Tabletten weniger hochglänzend hergestellt werden können im Vergleich zur Herstellung in einer teilweise perforierten Trommel.

Mischgeräte mit vollperforierter Trommel werden gemäß dem Stand der Technik genutzt, um die Luftzuführung außerhalb der Trommel anzuordnen, Beim Einsatz von solchen Vorrichtungen mit vollperforierten Trommein, die von Wettberbern der Patentinhaberin kommerziell vertrieben werden, werden höhere Luftmengen benötigt, um das gewünschte Ergebnis herzustellen, Die größere Luftzufuhr ist problematisch, da die Luft aufgewärmt werden muss. Es muss also entsprechend mehr Heizenergie eingesetzt werden. Entsprechend ergeben sich Kostennachteile bei der Herstellung mittels einer aus dem Stand der Technik bekannten, vollständig perforierten Trommel.

Die größere Luftmenge hat auch zur Folge, dass eine größere Menge an Suspension unerwünscht aus der Trommel heraustransportiert wird, Es geht so Suspension ungenutzt verloren. Die heraus transportierte Suspension kann auch nicht wieder zugeführt werden, da diese dann bereits zu sehr getrocknet ist, Auch hierdurch ergeben sich Kostennachtelle.

Indem erfindungsgemäß eine vollperforierte Trommel ebenfalls von innen her mit einer Luftzuführung bzw, einem Luftzuführungsschuh versehen worden ist, gelingt es im Vergleich zum Stand der Technik die benötigte Luftmenge deutlich zu reduzieren, Im Vergleich zum Stand der Technik mit den vollperforierten Trommeln ergeben sich so Kostenvorteile bei der Beschichtung von Tabletten.

Ein typische Durchmesser einer erfindungsgemäßen Trommel liegt bei 25 cm bis 1,70 m, Die Breite bzw, Tiefe der Trommel beträgt typischerweise 30 cm bis 1,50 m. Das Nutzvolumen der Trommel liegt typischerweise bei 1 bis 1000 l. Ein Nutzvolumen ist das Volumen, welches für die Aufnahme der Tabletten geeignet ist. Dieses Nutzvolumen reicht zum Beispiel im Fall der Trommel mit einer ringförmigen Öffnung bis an diese Öffnung heran.

Vorteilhaft ist unterhalb der Trommel und zwar vor allem im Fall der vollperforierten Trommel eine Absaugeinrichtung vorgesehen, die an die Trommel grenzt. Diese weist in einer einfachen Ausführungsform eine kastenförmige Öffnung auf, über die Luft aus der Trommel abgesaugt wird. Die kastenförmige Öffnung bzw, die obere Umrandung dieser Öffnung grenzt möglichst dicht an die Trommel an, Vorteilhaft ist die Umrandung mit einer Dichtlippe versehen, um so besonders zuverlässig in gewünschter Weise abzusaugen, In einer weiteren Ausführungsform oder ergänzend gibt es bei der Umrandung Rollen, auf denen die Trommel abgelegt ist. Diese Rollen unterstützen die Drehbewegung der Trommel und haben zugleich die Funktion, eine Abdichtung für die Absaugeinrichtung bereitzustellen,

Problematisch am durch die Absaugeinrichtung innerhalb der Trommel erzeugten Unterdruck ist, dass durch Luftdruckschwankungen getrocknete Suspension, also Staub unerwünscht aus der Trommel in den Innenraum der Vorrichtung austreten kann. Um dem entgegen zu wirken, wird bei der besagten Umrandung eine Luftzuführung vorgesehen, die als Sperre dient, In einer Ausführungsform kann es in Abhängigkeit von der eingesetzten Dichtung genügen, dass die Luft lediglich an einer Vorder- und Rückseite bei der Umrandung austritt. In einer anderen Ausführungsform tritt die Luft an sämtlichen vier Seiten der Umrandung aus,

Die Luftzufuhr bei der Umrandung hat die Funktion, eine Barriere für die Suspension zu bilden. Es kann so keine abgesaugte Suspension in den Innenraum der Vorrichtung gelangen, Dies senkt Reinigungskosten, da der Innenraum entsprechend weniger verschmutzt wird.

Während der Produktion befindet sich die Trommel in einem luftdicht abgeschlossenen Kasten, Dieser Kasten dient dem Schutz der Umwelt vor austretendem Staub, der durch getrocknete Suspensionen und Tablettenstaub gebildet worden ist,

Auf der Vorderseite gibt es in einer Ausführungsform einen umlaufenden Ring, Der umlaufende Ring läuft auf Rollen, während die Trommel gedreht wird, Auf diese Weise wird die Trommel an der Vorderseite gelagert, Der Ring ist über eine Dichtung nach außen abgedichtet. Das abschließende Teil ist luftdicht nach außen abgeschlossen, um so die Produktion nach außen abzuschirmen.

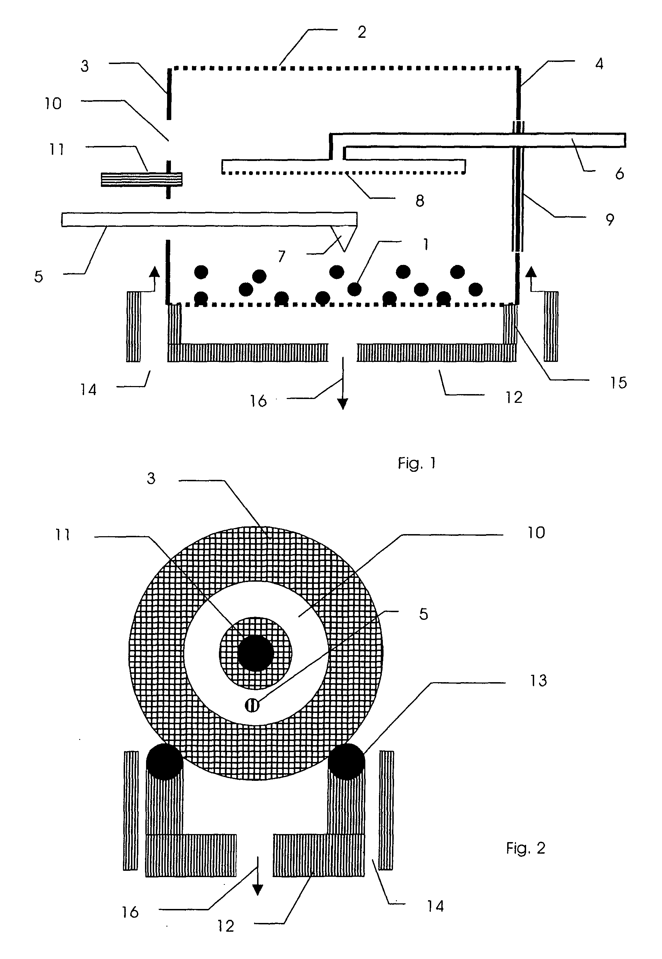

Die Erfindung wird anhand der Figuren 1 und 2 näher erläutert.

Figur 1 zeigt schematisch eine erfindungsgemäße Vorrichtung für das Beschichten von Tabletten 1 , Die Vorrichtung umfasst eine mit Perforierungen 2 versehene Trommel, die eine Vorderseite 3 und eine Rückseite 4 aufweist. Die Trommel wir in der Figur 1 im Schnitt gezeigt,

Eine erste Zuführung 5 für Suspension erfolgt über die Vorderseite 3 der Trommel. Eine zweite Zuführung 6 für Luft erfolgt über die Rückseite 4 der Trommel, Die Zuführung von Suspension ist am Ende im Inneren der Trommel mit mindestens einer Düse 7 versehen. Durch die Düse 7 tritt die Suspension in Richtung der in der Trommel befindlichen Tabletten 1 vernebelt aus. Die Zuführung für Luft weist am Ende im Inneren der Trommel eine gelochte Platte 8 auf, durch die die zugeführte Luft austritt, Die Strömung der Luft ist aufgrund der gelochten Platte 8, die aus einem Blech bestehen kann (Lochblech), sowie einer geeignet gewählten Strömungsgeschwindigkeit gleichgerichtet, Die Düse 7 für die Zuführung von Suspension sowie das Ende mit der gelochten Platte 8 für die Zuführung von Luft ist im Inneren der Trommel nach unten, also gleich mit der Düse zum Produktbett gerichtet, damit die austretende Suspension möglichst vollständig zu den Tabletten 1 gelangt. Zur Erreichung dieses Ziels ist das Ende 8 der Zuführung von Luft im Inneren der Trommel oberhalb des Endes 7 der Zuführung von Suspension angeordnet.

Die Zuführung von Luft in das Innere der Trommel hinein erfolgt durch eine drehfest montierte kreisförmige Platte 9, die Teil der Rückseite 4 der Trommel ist, Die kreisförmige Platte ist mit einer Bohrung versehen, über die die Zuführung bzw, Leitung 6 in das Innere der Trommel gelangt. Drehbar mit dieser kreisförmigen Platte 9 ist der übrige rückseitige Bereich 4 der Trommel verbunden, Weder dieser übrige rückseitige Bereich 4 noch die kreisförmige Platte 9 sind perforiert, um den rückseitigen und damit auch den produktseitigen Raum abzuschirmen, Die Trommel wird mit Ausnahme des kreisförmigen Rings während des Beschichtens der Tabletten 1 gedreht. Elektrische und sonstige für den Betrieb erforderliche Einrichtungen der Vorrichtung wie zum Beispiel Mittel für das Erwärmen der Luft, Gebläse für das Transportieren von Luft und/ oder Suspension, Antriebsmittel für das Drehen der Trommel, elektrische und elektronische Steuereinrichtungen für die Steuerung der Vorrichtung und/ oder elektrische Schließ- sowie sonstige Betätigungsmittel sind ganz oder zumindest überwiegend vom Inneren der Trommel aus gesehen hinter der Rückseite 4 platziert. Auf der einen Seite ist dieser Bereich aufgrund der geschlossenen Rückseite abgeschirmt. Die Einrichtungen sind so gut geschützt und können auch leicht elektrisch abgeschirmt werden, Auch bleibt der vor der Rückseite 4 liegende Bereich, der der Produktion dient, dann frei oder zumindest weitgehend frei von Einrichtungen, die andernfalls die Handhabung der Vorrichtung durch einen menschlichen Bediener nachteilhaft stören würde.

Die Vorderseite weist eine kreisförmige Öffnung 10 auf, durch die die Zuführung 5 für die Suspension in das Innere der Trommel gelangt,

Der gesamte Umfang der Trommel kann perforiert sein, ohne die aus dem Stand der Technik bekannten Nachteile in Bezug auf erhöhte Luftzufuhr in Kauf nehmen zu müssen.

Unterhalb der Trommel ist eine Absaugvorrichtung 12 vorgesehen. Durch diese wird die gewünschte Strömungsrichtung der Suspension verbessert eingehalten,

Die Absauvorrichtung umfasst ein Gehäuse, das mit zwei drehbar gelagerten Rollen 13 versehen ist, wie in der Figur 2 gezeigt wird, Auf den Rollen 13 wird die Trommel gelagert oder aufgelegt, Die Rollen 13 dienen so zugleich als Abdichtung. In einer Ausführungsform können die Rollen motorisiert gedreht werden. Die motorisierte Drehung der Trommel kann so besonders einfach erfolgen, da dann eine sonstige Lagerung entfallen kann, In diesem Fall ist es möglich, die Zuleitungen 5 oder 6 entlang der Drehachse in das Innere der Trommel zu führen. So kann im Fall der Luftzuführung die kreisförmige Platte entfallen, was die Herstellungskosten senken kann. Andernfalls kann die ringförmige Öffnung 10 entfallen, was den konstruktiven Aufwand senkt und das Nutzvolumen vergrößert.

Die Abdichtung der Absaugvorrichtung schützt den Produktionsraum vor Verunreinigungen infolge von aus der Trommel herausgeführter getrockneter Suspension, Die Abdichtung kann durch geeignete Maßnahmen wie Dichtlippen, Dichtleisten oder Dichtrollen erfolgen,

Die Absaugeinrichtung 1 2 weist bei ihrer Umrandung Luftzuführungen 14 auf, Diese grenzen bevorzugt an die Vorderseite 3 und an die Rückseite 4 der Trommel. Es bilden sich so Luftschleier angrenzend an die Vorderseite 3 und an die Rückseite 4 aus, Die Luftschleier schirmen den Produktionsraum vor getrockneter Suspension, also vor Staub ab, der nach unten durch die Perforierung hindurch aus der Trommel austritt.

Zusätzlich können seitlich bei der Umrandung der Absaugeinrichtung noch an die Trommel angrenzende Dichtlippen 15 vorgesehen sein, die das Innere der Absaugeinrichtung weiter verbessert gegenüber dem übrigen Außenraum abschirmen, um so den übrigen Außenraum nicht zu verschmutzen.

Über eine aus dem Gehäuse heraus führende Leitung 16 wird die abgesaugte Luft mit dem Staub entsorgt.

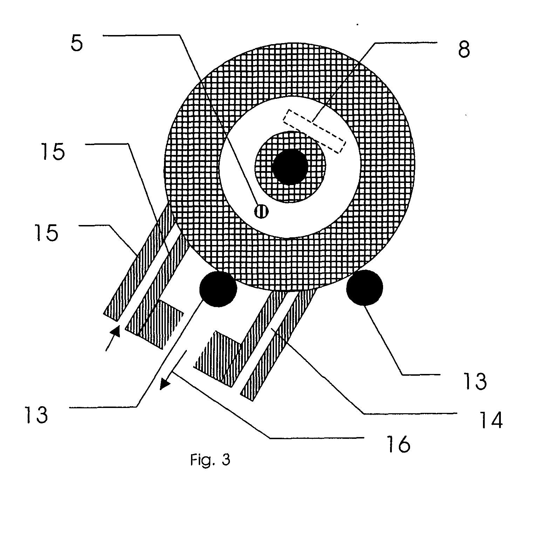

Die Ausführungsform nach Figur 2 berücksichtigt allerdings noch nicht, dass Suspension und Luftzuführung vorteilhaft schräg nach unten gerichtet sind, um so zu berücksichtigen, dass sich während des Betriebes die Tabletten im Mittel seitlich neben dem tiefsten Punkt in der Trommel befinden und zwar seitlich in Drehrichtung der Trommel, Bei einer Ausführungsform, bei der Luft und Suspension schräg in Richtung auf das Produktbett strömen, ist die Absaugeinrichtung bevorzugt entsprechend schräg angeordnet, wie der Figur 3 zu entnehmen ist, Dann dienen die Rollen 13 nur zur Abstützung. Eine Abdichtung vermögen diese Rollen bei dieser Ausführungsform grundsätzlich nicht zu bewirken, da sich dann in der Regel zumindest eine Rolle 13 außerhalb der Absaugeinrichtung befindet, Die Rollen unter der Trommel dienen dann nur der Abstützung, nicht aber der Abdichtung,

Die Dichtung der Absaugeinrichtung kann mit einer Dichtlippe 15 einfach dichtend erfolgen. Die Dichtlippe 15 dichtet dann zur inneren Seite hin ab, wie in der Figur 1 gezeigt wird, Es gibt dann einen freien Luftaustritt zur Trommelaußenseite, Anstelle einer einfachen Abdichtung können auch zwei Dichtlippen an die Trommel angrenzen, wie in der Figur 3 angedeutet wird,

Das Lochblech 8, die Düse, die Normale der Produktbettoberfläche 1 7 und der Auslaßkanal der Absaugung 16 liegen bevorzugt auf einer gemeinsamen, schräg verlaufenden Achse (angedeutet in Fig. 3).

## Patentansprüche

1. Vorrichtung für das Beschichten von Tabletten (1) mit einer mit Perforierungen (2) versehenen Trommel, die eine Vorderseite (3) und eine Rückseite (4) aufweist, wobei eine erste Zuführung (5) für Suspension oder Luft über die Vorderseite (3) vorgesehen ist **dadurch gekennzeichnet, dass** eine zweite Zuführung (6) für Luft oder Suspension durch die Rückseite (4) vorgesehen ist.

2. Vorrichtung nach Anspruch 1 , bei der die Zuführung (5) für die Suspension über die Vorderseite (3) erfolgt.

3. Vorrichtung nach Anspruch 1 oder 2, bei der die Zuführung von Suspension am Ende Im inneren der Trommel mit mindestens einer Düse (7) versehen ist.

4. Vorrichtung nach einem der vorhergehenden Ansprüche, bei der die Zuführung für Luft am Ende im Inneren der Trommel mit einem Lochblech oder einer gelochten Platte (8) versehen ist.

5. Vorrichtung nach einem der vorhergehenden Ansprüche, bei der das Ende (7) der Zuführung von Suspension und/ oder das Ende (8) der Zuführung von Luft im Inneren der Trommel nach unten und zwar insbesondere schräg nach unten gerichtet ist, so dass die Strömungsrichtung der Luft und der Suspension mit der Vertikalen einen Winkel zwischen 0° und 45° einschließen und dabei Luft und Suspension in gleicher Richtung strömen.

6. Vorrichtung nach einem der vorhergehenden Ansprüche, bei der das Ende (8) der Zuführung von Luft im Inneren der Trommel ganz oder überwiegend oberhalb des Endes (7) der Zuführung von Suspension angeordnet ist.

7. Vorrichtung nach einem der vorhergehenden Ansprüche, bei der die Zuführung (6) von Luft In das Innere der Trommel durch eine drehfest angebrachte kreisförmige Platte (9) erfolgt, die bevorzugt Teil der Rückseite (4) der Trommel ist.

8. Vorrichtung nach einem der vorhergehenden Ansprüche, bei der elektrische Einrichtungen der Vorrichtung von der Trommel aus gesehen hinter der Rückseite (4) platziert sind.

9. Vorrichtung nach einem der vorhergehenden Ansprüche, bei der der gesamte Umfang der Trommel perforiert ist.

10. Vorrichtung nach einem der vorhergehenden Ansprüche, bei der unterhalb der Trommel eine Absaugeinrichtung (12) vorgesehen ist.

11. Vorrichtung nach dem vorhergehenden Anspruch, bei der die Absaugvorrichtung mit drehbar gelagerten Rollen (13) versehen ist, auf denen die Trommel abgelegt ist.

12. Vorrichtung nach einem der beiden vorhergehenden Ansprüche, bei der die Absaugeinrichtung bei ihrer Umrandung eine Luftzuführung (14) aufweist und zwar insbesondere angrenzend an die Vorderseite (3) der Trommel und an die Rückseite (4) der Trommel.

13. Verfahren für das Beschichten von Tabletten mit den Schritten:
- Befüllen einer Trommel mit Tabletten,
- Zuführung von Suspension in das Innere der Trommel über eine Leitung, die durch die eine Seite der Trommel geführt ist;
- Vernebelung der Suspension im Inneren der Trommel;
- Erwärmung und Zuführung von Luft In das Innere der Trommel über eine andere Leitung, die durch die andere Seite der Trommel geführt ist;
- Drehen der Trommel während der Zuführung von Luft und Suspension;
- Entnahme der **dadurch** beschichteten Tabletten aus der Trommel.

## Claims

1. Device for coating tablets (1), said device having a drum which is provided with perforations (2) and has a front side (3) and a rear side (4), wherein a first feed (5) for suspension or air via the front side (3) is provided, **characterised in that** a second feed (6) for air or suspension through the rear side (4) is provided.

2. Device according to claim 1, in which the feed (5) for the suspension takes place via the front side (3).

3. Device according to claim 1 or 2, in which the suspension feed is provided, at the end in the interior of the drum, with at least one nozzle (7).

4. Device according to one of the preceding claims, in which the feed for air is provided, at the end in the interior of the drum, with an apertured metal sheet or a perforated plate (8).

5. Device according to one of the preceding claims, in which the end (7) of the suspension feed and/or the end (8) of the air feed in the interior of the drum is directed downwards, that is to say, in particular, obliquely downwards, so that the directions of flow of the air and of the suspension form an angle of between 0° and 45° with the vertical and, under these circumstances, air and suspension flow in the same direction.

6. Device according to one of the preceding claims, in which the end (8) of the air feed in the interior of the drum is disposed, entirely or predominantly, above the end (7) of the suspension feed.

7. Device according to one of the preceding claims, in which the feed (6) of air into the interior of the drum takes place through a circular plate (9) which is attached in a torsion-proof manner and is preferably part of the rear side (4) of the drum.

8. Device according to one of the preceding claims, in which electrical apparatuses belonging to the device are positioned, viewed from the drum, behind the rear side (4).

9. Device according to one of the preceding claims, in which the entire periphery of the drum is perforated.

10. Device according to one of the preceding claims, in which a suction-type extracting apparatus (12) is provided underneath the drum.

11. Device according to the preceding claim, in which the suction-type extracting device is provided with rotatably mounted rollers (13) on which the drum is deposited.

12. Device according to either of the two preceding claims, in which the suction-type extracting apparatus has an air feed (14) at its edge, that is to say, in particular, in a manner adjoining the front side (3) of the drum and the rear side (4) of said drum.

13. Method of coating tablets, said method comprising the following steps:
- the filling of a drum with tablets;
- the feeding of suspension into the interior of the drum via a line which is routed through one side of said drum;
- the atomizing of the suspension in the interior of the drum;
- the heating of air and the feeding thereof into the interior of the drum via another line which is routed through the other side of the drum;
- the rotation of the drum during the feeding-in of air and suspension;
- the removal from the drum of the tablets which have been coated by this means.

## Revendications

1. Dispositif pour l'enrobage de comprimés (1) avec un tambour muni de perforations (2), qui présente un côté avant (3) et un côté arrière (4), dans lequel est prévue une première alimentation (5) pour une suspension ou pour de l'air via le côté avant (3), **caractérisé en ce qu'**une deuxième alimentation (6) pour de l'air ou pour une suspension est prévue via le côté arrière (4).

2. Dispositif selon la revendication 1, dans lequel l'alimentation (5) pour la suspension a lieu via le côté avant (3).

3. Dispositif selon la revendication 1 ou 2, dans lequel l'alimentation de la suspension est munie, à son extrémité, à l'intérieur du tambour, d'au moins une buse (7).

4. Dispositif selon l'une quelconque des revendications précédentes, dans lequel l'alimentation pour l'air est munie, à son extrémité, à l'intérieur du tambour, d'une tôle perforée ou d'une plaque perforée (8).

5. Dispositif selon l'une quelconque des revendications précédentes, dans lequel l'extrémité (7) de l'alimentation de la suspension et/ou l'extrémité (8) de l'alimentation d'air, à l'intérieur du tambour, est orientée vers le bas, à savoir, en particulier, en inclinaison vers le bas, si bien que la direction d'écoulement de l'air et celle de la suspension forment, avec la verticale, un angle entre 0° et 45°, l'air et la suspension s'écoulant ainsi dans la même direction.

6. Dispositif selon l'une quelconque des revendications précédentes, dans lequel l'extrémité (8) de l'alimentation d'air, à l'intérieur du tambour, est disposée totalement ou principalement au-dessus de l'extrémité (7) de l'alimentation de la suspension.

7. Dispositif selon l'une quelconque des revendications précédentes, dans lequel l'alimentation (6) d'air à l'intérieur du tambour a lieu à travers une plaque circulaire (9) appliquée en antirotation, qui fait de préférence partie du côté arrière (4) du tambour.

8. Dispositif selon l'une quelconque des revendications précédentes, dans lequel des équipements électriques du dispositif sont placés à l'arrière du côté arrière (4), vu à partir du tambour.

9. Dispositif selon l'une quelconque des revendications précédentes, dans lequel la périphérie totale du tambour est perforée.

10. Dispositif selon l'une quelconque des revendications précédentes, dans lequel un mécanisme d'aspiration (12) est prévu en dessous du tambour.

11. Dispositif selon la revendication précédente, dans lequel le dispositif d'aspiration est muni de rouleaux (13) montés en rotation, sur lesquels est déposé le tambour.

12. Dispositif selon l'une quelconque des deux revendications précédentes, dans lequel le dispositif d'aspiration présente, sur sa bordure, une alimentation d'air (14), à savoir, en particulier, en position limitrophe au côté avant (3) du tambour et au côté arrière (4) du tambour.

13. Procédé pour l'enduction de comprimés, comprenant les étapes consistant à :
- remplir un tambour avec des comprimés ;
- alimenter une suspension à l'intérieur du tambour via un conduit qui est guidé à travers un premier côté du tambour ;
- vaporiser la suspension à l'intérieur du tambour ;
- chauffer et alimenter de l'air à l'intérieur du tambour via un autre conduit qui est guidé à travers l'autre côté du tambour ;
- faire tourner le tambour lors de l'alimentation de l'air et de la suspension ;
- retirer du tambour les comprimés ainsi enrobés.
